# EUROPÄISCHE PATENTSCHRIFT

(11) **EP 3 799 284 B1**
(45) Veröffentlichungstag und Bekanntmachung des Hinweises auf die Patenterteilung: **18.11.2026**
(21) Anmeldenummer: 20206098.4
(22) Anmeldetag: 21.12.2016
(51) Int. Cl.: H02M 3/02, H02M 3/158, H02J 1/02, H02M 3/155

(54) **GLEICHSTROMWANDLER**
DC-DC CONVERTER
CONVERTISSEUR DE COURANT CONTINU

(30) Priorität: 22.12.2015 DE 102015122567
(43) Veröffentlichungstag der Anmeldung: 31.03.2021
(62) Dokumentnummer(n) der früheren Anmeldung(en) nach Art. 76 EPÜ: 16828708.4 / 3 394 972
(73) Patentinhaber: Novum engineerING GmbH, 01067 Dresden (DE)
(72) Erfinder: Birth, Sören, 01307 Dresden (DE)
(74) Vertreter: Ter Meer und Partner mbB

(56) Entgegenhaltungen:
- CN-A- 104 734 496
- DE-T2- 69 223 477
- US-A- 5 736 842
- GARINTO D ED - ZELTSER I ET AL: "A New Zero-Ripple Boost Converter with Separate Inductors for Power Factor Correction", POWER ELECTRONICS SPECIALISTS CONFERENCE, 2007. PESC 2007. IEEE, IEEE, PISCATAWAY, NJ, USA, 17 June 2007 (2007-06-17), pages 1309 - 1313, XP031218474, ISBN: 978-1-4244-0654-8

## Beschreibung

Die Erfindung betrifft einen Gleichstromwandler, umfassend einen Eingang und einen Ausgang, einen zwischen dem Eingang und dem Ausgang angeordneten Längszweig, in welchem mindestens eine erste Induktivität und ein erster Kondensator angeordnet sind, und einen in einem ersten Querzweig am Ausgang angeordneten Kondensator sowie einen weiteren Querzweig mit unterschiedlichen Anordnungen einer zweiten Induktivität und zweier Schalter.

In vielen Bereichen der Technik ist es notwendig, eine zur Verfügung stehende Gleichspannung zu wandeln, um damit angeschlossene Verbraucher zu betreiben. Eine derartige Wandlung einer zur Verfügung stehenden sogenannten Eingangsspannung Ue kann beispielsweise mittels eines Gleichstromwandlers erfolgen, wobei der Gleichstromwandler eine Ausgangsspannung Ua für die angeschlossenen Verbraucher erzeugen kann, welche kleiner oder größer als die Eingangsspannung Ue ist.

Anwendung finden derartige Gleichstromwandler beispielsweise in Maschinen oder Anlagen in der Industrie, in einer Vielzahl elektronischer Geräte und im Fahrzeugbau. Beispielsweise in sogenannten Schaltnetzteilen, welche häufig in Computern, Nootbooks, Mobiltelefonen, HiFi-Geräten und kleinen Motoren eingesetzt werden, sind derartige Gleichstromwandler üblich.

Die Vorteile derartiger Wandler liegen in einem verbesserten Wirkungsgrad sowie in einer verringerten Wärmeentwicklung.

Zur Umformung der elektrischen Energie werden meist sogenannte getaktete Wandler als Gleichstromwandler eingesetzt, die mittels einem Steuersignal, welches den Takt der Umschaltung des im Wandler angeordneten, einzigen Schalters vorgibt, angesteuert werden. Üblicherweise werden in derartigen Wandlern ein oder mehrere passive elektrische Speicher, wie Kapazitäten und/oder Induktivitäten, angeordnet. Das Wirkprinzip bei der Wandlung einer Eingangsspannung in eine Ausgangsspannung ist ein gesteuertes zyklisches Laden und Entladen der passiven elektrischen Speicher.

An der Stelle eines im Gleichstromwandler notwendigen Schalters kommen beispielsweise aktive, elektrische Halbleiterschalter wie ein BJT (Bipolar Junction Transistor), ein MOSFET (Metal-Oxide-Semiconductor Field-Effect-Transistor) oder ein IGBT (Insulated-Gate Bipolar-Transistor) zum Einsatz.

Durch das zyklische Laden und Entladen der passiven elektrischen Speicher, wie Kapazitäten und/oder Induktivitäten, ergibt sich ein dreieckförmiger Strom- bzw. Spannungsverlauf am Eingang und/oder am Ausgang des Leistungsstellers. Dieser Effekt wird auch als Ripple bezeichnet und stellt einen Wechselstrom mit einer beliebigen Frequenz und Kurvenform dar, welcher einem Gleichstrom überlagert ist. Verwendet wird auch der Begriff eines pulsierenden Gleichstroms.

Diese auftretenden hochfrequenten Ripple erzeugen Oberschwingungen, welche Störungen in weiteren angeschlossenen elektronischen Baugruppen verursachen. Um diese elektromagnetischen Störfelder zu beschränken, wird im Allgemeinen versucht, die Ripple durch größere oder zusätzlich eingesetzte Bauelemente zu bedämpfen. Derartige Ansätze finden sich in "A 'Zero'Ripple Technique Applicable To Any DC Converter" David C. Hamill, Surrey Space Centre, University of Surrey, Guildford, UK, d.hamill@surrey.ac.uk und in Ripple Steering AC-DC Converters to Minimize Input Filter Eric CHOU, Frank CHEN, Claudio Adragna, Bruce LU.

Weiterhin existieren Ideen, die Ripple durch aktive zusätzliche Quellen zu reduzieren, wie in Techniques for Input Ripple Current Cancellation: Classification and Implementation, N.K. Poon, J.C.P. Liu, C.K. Tse and M.H. Pong dargestellt. Alternativ sind auch Modifikationen mit gekoppelten Induktivitäten aus AN3180, Application note, A 200 W ripple-free input current PFC pre-regulator with theL6563S, ^{©}2010 STMicroelectronics bekannt, um die Störungen zu minimieren.

US 5736842 A beschreibt eine Technik zum Verringern von Verlusten in Hochspannungs-Hochleistungskonvertern. In einem Beispiel umfasst ein Konverter mit einer nicht-isolierten Cuk-Konverter-Topologie eine Spannungsquelle; einen Längszweig mit einer ersten Induktivität, einem ersten Kondensator und einer weiteren Induktivität; einen Ausgangskondensator; einen Querzweig mit einer Diode; einen Querzweig mit einem Kondensator, einem MOSFET-Schalter und einem MOSFET-Hilfsschalter; einen weiteren Querzweig mit einer Diode; und eine Induktivität, die einen Punkt zwischen der ersten Induktivität und dem ersten Kondensator mit einem Punkt zwischen dem MOSFET-Schalter und dem MOSFET-Hilfsschalter verbindet.

CN 104734496 A beschreibt einen SEPIC-Inverswandler mit vier Induktivitäten in Form von vier miteinander gekoppelten Spulen. In einem Beispiel umfasst der Wandler einen Eingang; einen Ausgang; einen ersten Längszweig mit einer Leck-Induktivität, einer ersten Koppel-Induktivität, einer ersten Kapazität und einem dritten Schalter; einen ersten Querzweig mit einem Kondensator; einen zweiten Querzweig mit einem zweiten Schalter und einer zweiten Koppel-Induktivität, wobei ein der zweiten Koppel-Induktivität abgewandter Anschluss des zweiten Schalters direkt mit dem Ausgang verbunden ist; und einen ersten Schalter, dessen erster Anschluss mit einem Punkt zwischen dem zweiten Schalter und der zweiten Koppel-Induktivität verbunden ist und dessen zweiter Anschluss mit einem Punkt zwischen der ersten Koppel-Induktivität und der ersten Kapazität verbunden ist. In einem weiteren Querzweig ist eine dritte Koppel-Induktivität parallel zum dritten Schalter angeordnet.

D. Garinto: A New Zero-Ripple Boost Converter with Separate Inductors for Power Factor Correction, 2007 IEEE Power Electronics Specialists Conference, ISBN 978-1-4244-0654-8, beschreibt eine Schaltungstopologie mit zwei separaten Induktivitäten, zwei Kapazitäten, einem Schalter und einer Diode.

DE 692 23 477 T2 beschreibt ein Beispiel einer Schaltung vom Buck-Boost-Typ.

Die Aufgabe der Erfindung besteht darin, einen Gleichstromwandler anzugeben, welcher einfach und preiswert herstellbar ist und dessen, einem Gleichstrom überlagerter, Wechselstromanteil in einer Ausgangsspannung (Rippel) vermindert ist.

Die Aufgabe wird durch einen Gegenstand mit den Merkmalen gemäß den unabhängigen Patentansprüchen gelöst. Weiterbildungen sind in den abhängigen Patentansprüchen angegeben. Die Aufgabe wird ferner durch einen Gegenstand mit den Merkmalen gemäß den weiter unten beschriebenen Aspekten der Erfindung gelöst

Vorgesehen ist es, den Gleichstromwandler derart auszuführen, dass in einem Längszweig mindestens eine Induktivität und eine Kapazität angeordnet sind. In einem ausgangsseitigen Querzweig ist eine weitere Kapazität angeordnet. In einer zu diesem ausgangsseitigen Querzweig angeordneten Parallelschaltung werden in einer ersten Variante zwei Schalter angeordnet, wobei ein Mittelabgriff zwischen diesen beiden Schaltern mit einem ersten Anschluss einer weiteren Induktivität verbunden ist. Der zweite Anschluss dieser Induktivität ist mit einem Punkt zwischen der im Längszweig angeordneten Induktivität und dem Kondensator verbunden.

In einer alternativen Ausführung des Gleichstromwandlers ist es vorgesehen, statt der beiden Schalter im weiteren Querzweig eine Induktivität und einen Schalter anzuordnen. Bei dieser Reihenschaltung kann die Position der beiden Bauelemente auch vertauscht werden. Der sich zwischen den beiden Bauelementen befindliche Punkt ist mit einem Anschluss eines ersten Schalters verbunden, dessen zweiter Anschluss mit einem Punkt zwischen der im Längszweig angeordneten Induktivität und dem Kondensator verbunden ist.

Vorteilhaft ist es, für die Schalter im Gleichstromwandler aktive Halbleiterschalter einzusetzen.

Diese aktiven Halbleiterschalter können beispielsweise ein BJT, ein MOSFET oder ein IGBT sein. Eine Beschränkung auf diese aufgezählten Halbleiterschalter ist nicht gegeben.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen:
- Fig. 1:: einen Gleichstromwandler aus dem Stand der Technik (SEPIC-Wandler),
- Fig. 2:: eine erste Realisierung des erfindungsgemäßen Gleichstromwandlers,
- Fig. 3:: eine zweite Realisierung des erfindungsgemäßen Gleichstromwandlers,
- Fig. 4:: eine dritte Realisierung des erfindungsgemäßen Gleichstromwandlers,
- Fig. 5:: eine Anwendung des erfindungsgemäßen Gleichstromwandlers in einer Wechselstrombrücke und
- Fig. 6:: eine grafische Darstellung ermittelter Ripple im Vergleich zwischen dem Stand der Technik und der vorliegenden Erfindung.

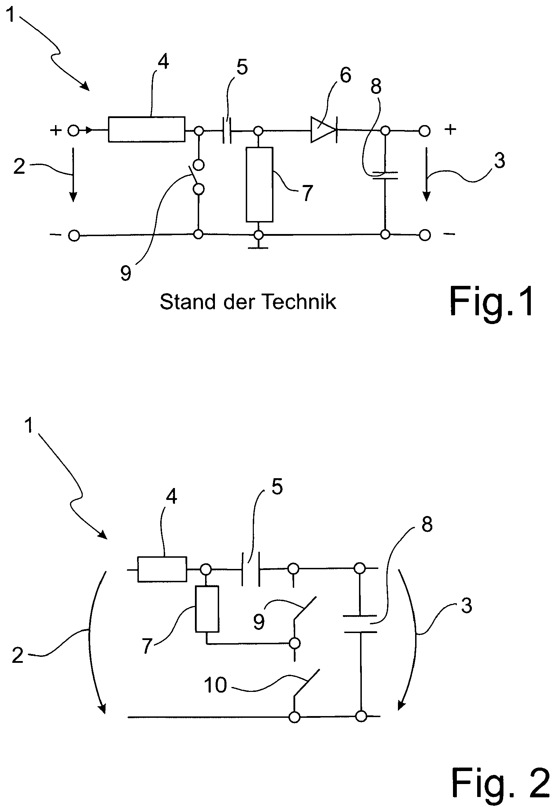

In der Figur 1 ist ein Gleichstromwandler 1 aus dem Stand der Technik dargestellt. Der gezeigte Gleichstromwandler 1 ist ein sogenannter SEPIC-Wandler (SEPIC - Single Ended Primary Inductance Converter), welcher stellvertretend aus der Menge der nicht galvanisch trennenden Wandler ausgewählt wurde, die mit 4 passiven Speichern, also beispielsweise zwei Kapazitäten und zwei Induktivitäten, aufgebaut werden. Dieser Gleichstromwandler hat die Eigenschaft, dass er sich derart betreiben lässt, dass die Ausgangsspannung kleiner oder größer als die Eingangsspannung sein kann.

Der Gleichstromwandler 1 hat einen Eingang 2, an welchen eine Eingangsspannung Ue angelegt werden kann, und einen Ausgang 3, an welchem eine Ausgangsspannung Ua vom Gleichstromwandler 1 gewandelt, bereitgestellt wird. Der Gleichstromwandler 1 kann eine Ausgangsspannung Ua bereitstellen, welche größer oder kleiner als die Eingangsspannung Ue sein kann.

Der Gleichstromwandler 1 weist in einem Längszweig eine erste Induktivität 4, eine erste Kapazität 5 sowie eine Diode 6 auf. In einem ausgangsseitigen Querzweig ist eine zweite Kapazität 8 parallel zu einem am Ausgang 3 angeschlossenen Lastwiderstand, welcher in der Figur 2 nicht dargestellt ist, angeordnet. In einem weiteren Querzweig, zwischen der ersten Kapazität 5 und der Diode 6, ist eine zweite Induktivität 7 angeordnet. Zwischen der ersten Induktivität 4 und der ersten Kapazität 5 ist ebenfalls in einem dritten Querzweig ein erster Schalter 9 angeordnet.

Wird bei dem in der Figur 1 dargestellten Gleichstromwandler 1 der Schalter 9 geschlossen, so liegt an der ersten Induktivität 4 die Eingangsspannung an. Gleichzeitig liegt an der ersten Kapazität 5 eine Spannung an, welche von ihrem Wert der Eingangsspannung am Eingang 2 entspricht. Der durch die erste und die zweite Induktivität 4 und 7 fließende Strom steigt an, wobei Energie in den Induktivitäten 4 und 7 gespeichert wird.

Zu diesem Zeitpunkt liefert die ausgangsseitig angeordnete zweite Kapazität 8 den Ausgangsstrom für eine angeschlossene Last oder einen Verbraucher, da die Diode 6 gesperrt ist. Wird der Schalter 9 geöffnet, kehrt sich die Polarität der Spannungen an der ersten und der zweiten Induktivität 4 und 7 um. Die Diode 6 schaltet durch und leitet die gespeicherte Energie zur zweiten Kapazität 8 und somit auch zur angeschlossenen Last.

In der Figur 2 ist eine erste Realisierung des erfindungsgemäßen Gleichstromwandlers 1 gezeigt. Der Gleichstromwandler 1 weist in seinem Längszweig, zwischen seinem Eingang 2 und seinem Ausgang 3, mindestens eine erste Induktivität 4 und eine erste Kapazität 5 auf. In einem ausgangsseitigen Querzweig ist eine zweite Kapazität 8 angeordnet, welche parallel zu einer nicht dargestellten Last am Ausgang 3 geschaltet ist.

Ebenfalls parallel zum Ausgang 3 und der zweiten Kapazität 8 sind ein erster Schalter 9 und ein zweiter Schalter 10 in Reihe geschaltet angeordnet. Eine zweite Induktivität 7 ist zwischen der ersten Induktivität 4 und der ersten Kapazität 5 und einem Anschluss zwischen den in Reihe geschalteten Schaltern 9 und 10 angeordnet.

Vorzugsweise sind die Schalter 9 und 10 als aktive Halbleiterschalter ausgeführt. Zum Einsatz kommen beispielsweise BJT (Bipolar Junction Transistor), MOSFET (Metal-Oxide-Semiconductor Field-Effect Transistor), IGBT (Insulated-Gate Bipolar Transistor) oder andere.

Vorgesehen ist es, die Schalter mittels eines von einer zentralen Steuerung, welche in der Figur 2 nicht dargestellt ist, erzeugten Steuersignals anzusteuern. Die zentrale Steuerung stellt die Steuersignale für die mechanischen oder elektronischen Schalter 9 und 10 derart bereit, dass die Schalter 9 und 10 wechselseitig angesteuert werden. Somit ist der Schalter 9 geschlossen, wenn der Schalter 10 geöffnet ist und umgekehrt.

In der in der Figur 2 dargestellten erfindungsgemäßen Schaltungsanordnung ist die Richtung des Stromflusses abhängig von einem gewählten Tastverhältnis der Ansteuersignale der Schalter 9 und 10 sowie von den am Eingang 2 und am Ausgang 3 anliegenden Spannungen Ue und Ua.

Die Schalter 9 und 10 können mit dem Verfahren der Zustandsraummittlung sowie einer speziellen Form des Zero-Voltage-Switching, bei dem der Schwingkreis parallel zum Schalter liegt und aktiv von einem zusätzlichen Schaltimpuls zum Schwingen angeregt wird, angesteuert werden.

Der Gleichstromwandler 1 in der Figur 2 kann aus einer am Eingang 2 anliegenden Eingangsspannung Ue eine größere am Ausgang 3 ausgegebene Ausgangsspannung Ua erzeugen. Bei einem derartigen Gleichstromwandler 1 ergibt sich der erfindungsgemäß verminderte Ripple, also ein verringerter pulsierender Gleichstrom, am Eingang 2. Der Eingang kann mit dem Ausgang getauscht und dadurch die Funktionsweise umgekehrt werden. Wird am Ausgang 3 eine Eingangsspannung Ue angelegt und der Gleichstromwandler 1 entsprechend angesteuert, so wird am Eingang 2 eine Ausgangsspannung Ua ausgegeben, welche beispielsweise kleiner als Ue ist.

Für den Fall, dass die Funktionsweise des Gleichstromwandlers umgedreht wird, ergibt sich der verminderte Rippel nicht mehr eingangsseitig des Wandlers sondern ausgangsseitig.

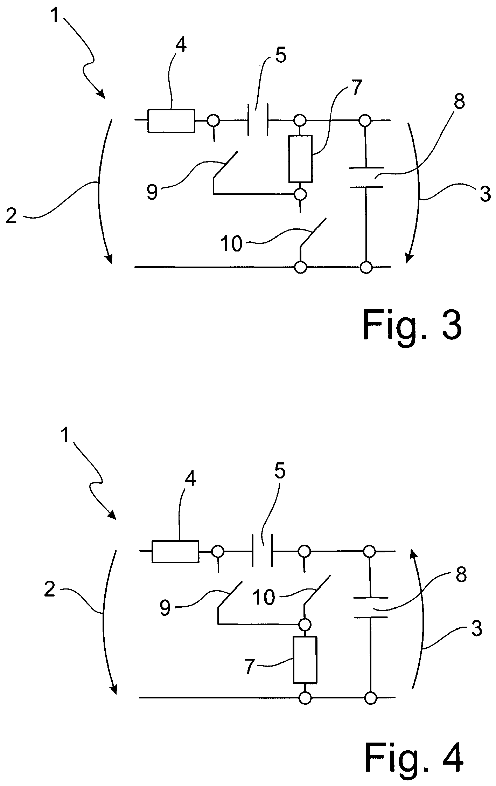

In der Figur 3 ist eine zweite Realisierung des erfindungsgemäßen Gleichstromwandlers 1 dargestellt. Der Gleichstromwandler 1 weist in seinem Längszweig, zwischen seinem Eingang 2 und seinem Ausgang 3, mindestens eine erste Induktivität 4 und eine erste Kapazität 5 auf. In einem ausgangsseitigen Querzweig ist eine zweite Kapazität 8 angeordnet, welche parallel zu einer nicht dargestellten Last am Ausgang 3 geschaltet ist.

Ebenfalls parallel zum Ausgang 3 und der zweiten Kapazität 8 sind eine zweite Induktivität 7 und ein zweiter Schalter 10 in Reihe geschaltet angeordnet. Ein erster Schalter 9 ist zwischen der ersten Induktivität 4 und der ersten Kapazität 5 und einem Anschluss zwischen der zweiten Induktivität 7 und dem ersten Schalter 9 angeordnet.

In der Figur 4 ist eine dritte Realisierung des erfindungsgemäßen Gleichstromwandlers 1 dargestellt. Der Gleichstromwandler 1 weist in seinem Längszweig, zwischen seinem Eingang 2 und seinem Ausgang 3, mindestens eine erste Induktivität 4 und eine erste Kapazität 5 auf. In einem ausgangsseitigen Querzweig ist eine zweite Kapazität 8 angeordnet, welche parallel zu einer nicht dargestellten Last am Ausgang 3 geschaltet ist.

Ebenfalls parallel zum Ausgang 3 und der zweiten Kapazität 8 sind ein zweiter Schalter 10 und eine zweite Induktivität 7 in Reihe geschaltet angeordnet. Ein zweiter Schalter 9 ist zwischen der ersten Induktivität 4 und der ersten Kapazität 5 und einem Anschluss zwischen den in Reihe geschalteten Elementen Schalter 10 und zweite Induktivität 7 angeordnet.

Bei dem in der Figur 4 gezeigten Gleichstromwandler 1 kehrt sich die Polarität der Spannung am Ausgang 3 um.

Die Schalter 9 und 10 können mit dem Verfahren der Zustandsraummittlung sowie einer speziellen Form des Zero-Voltage-Switching, bei dem der Schwingkreis parallel zum Schalter liegt und aktiv von einem zusätzlichen Schaltimpuls zum Schwingen angeregt wird, angesteuert werden.

Für den Fall, dass an der Stelle der Schalter 9 und/oder 10 ein aktiver Halbleiterschalter, wie beispielsweise eine IGBT oder ein MOSFET, zum Einsatz kommen, bilden diese Schalter 9 und/oder 10 in einem Zustand, in welchem der Schalter 9 und/oder 10 nicht durchgesteuert ist oder sind, eine Diode. Diese Diode ermöglicht einen gerichteten Stromfluss. Im Fall eines Durchsteuerns eines oder beider Schalter 9 und/oder 10 weisen die Halbleiterschalter einen sehr niedrigen Übergangswiderstand auf und ermöglichen einen Stromfluss in eine beliebige Richtung.

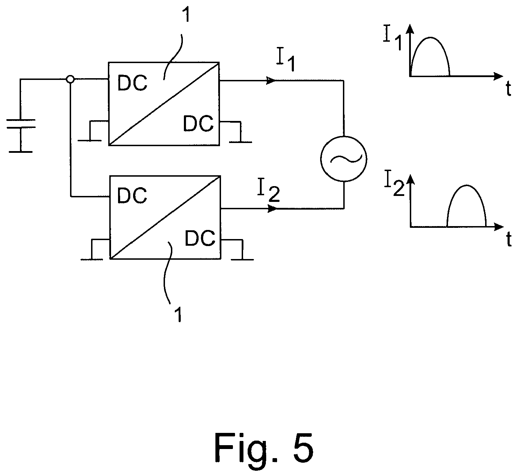

In der Figur 5 ist eine Anwendung des Gleichstromwandlers 1 in einer Wechselstrombrücke gezeigt. Zur Erzeugung einer beispielsweise für einen Verbraucher, wie einen Motor, benötigten, sinusförmigen Wechselspannung, werden zwei Gleichstromwandler 1 genutzt. Eine Spannungsquelle wird mit den Eingängen beider Gleichstromwandler 1 eingangsseitig verbunden. Mittels entsprechender Steuersignale für die Schalter 9 und 10 in den Gleichstromwandlern 1 erzeugt der obere in der Figur 5 dargestellte Gleichstromwandler 1 eine positive Halbwelle. Dies ist in der Figur 5 in einem kleinen Diagramm mit einem Strom-Zeit-Verlauf für den Strom I1 dargestellt. Die negative Halbwelle wird mittels des unteren Gleichstromwandlers 1 erzeugt. Der zugehörige Verlauf des Stromes I2 ist ebenfalls in einem kleinen Diagramm dargestellt.

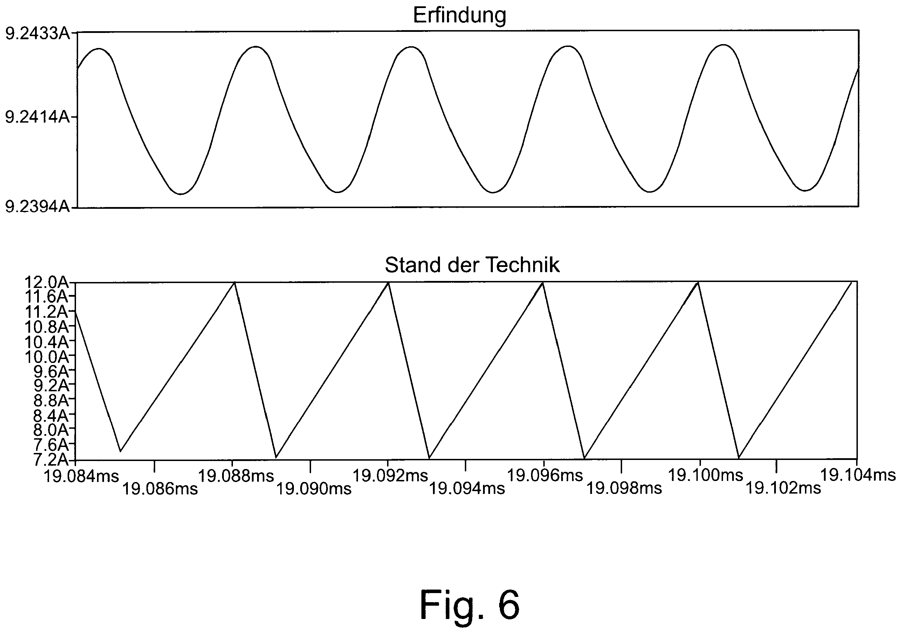

Bei einer Gegenüberstellung eines erfindungsgemäßen Gleichstromwandlers 1 nach der Figur 2 im Vergleich mit einem aus dem Stand der Technik bekannten SEPIC-Wandler wurde nachgewiesen, dass der störende Rippel stark reduziert werden konnte. Wie in der Figur 6 auszugsweise dargestellt ist, ergaben die Vergleichsmessungen, dass der SEPIC-Wandler, dargestellt im oberen Bereich des Strom-Zeit-Verlaufs, Rippelströme im Bereich von etwa 4 A aufwies, während der erfindungsgemäße Wandler, dargestellt im unteren Bereich des Strom-Zeit-Verlaufs, mit seinem Rippelstrom im Bereich von etwa 4 mA lag. Somit konnte der Rippel mittels der Erfindung stark minimiert werden.

Die Erfindung kann in vielen Bereichen der Umformung von elektrischer Energie eingesetzt werden, wie beispielsweise bei der
- uni- oder bidirektionalen Gleichstromwandlung,
- Erweiterung der Gleichstromvariante zur Wechselstrombrücke,
- Impedanzspektroskopie von Energiequellen (Rippelarm),
- Ansteuerung von Elektromotoren oder der
- Batterieladung in Batteriemanagementsystemen.

Eine beispielhafte Anwendung der Erfindung bei der Impedanzspektroskopie soll nachfolgend beschrieben werden.

Die charakteristische Impedanz einer elektrochemischen Energiequelle, wie einem Akkumulator oder einer Brennstoffzelle, gibt Aufschluss über die inneren Zustände der Quelle. Um die Impedanz zu messen, wird die Quelle entweder mit einem gezielten Störstrom beaufschlagt und die Spannungsantwort gemessen, oder mit einer Störspannung überlagert, wobei die Reaktion des Stromes erfasst wird. In beiden Fällen ist diesem gezielten Störsignal der Ripplestrom, bzw. eine Ripplespannung überlagert. Durch die dargestellte Erfindung kann die Beeinflussung durch den Ripplestrom erheblich reduziert werden, sodass eine wesentlich verbesserte, kaum von Störungen verfälschte Impedanzmessung möglich wird.

Ein Vorteil des erfindungsgemäßen Gleichstromwandlers liegt in einer Reduzierung der Ripple ohne einen Einsatz von zusätzlichen, größeren oder andersartigen Bauelementen in der Gleichstromwandlerschaltung. Ein weiterer Vorteil liegt darin, dass die im Gleichstromwandler eingesetzten Bauelemente keinen speziellen Dimensionierungsvorschriften unterliegen.

Nachfolgend werden Ausführungsformen der Erfindung beschrieben.

Gemäß einem ersten Aspekt wird zur Verfügung gestellt ein Gleichstromwandler, umfassend einen Eingang (2) und einen Ausgang (3), einen zwischen dem Eingang (2) und dem Ausgang (3) angeordneten Längszweig, in welchem mindestens eine erste Induktivität (4) und ein erster Kondensator (5) angeordnet sind, und einen in einem ersten Querzweig am Ausgang (3) angeordneten Kondensator (8), dadurch gekennzeichnet, dass in einem parallel zum ersten Querzweig angeordneten zweiten Querzweig ein erster Schalter (9) und ein zweiter Schalter (10) in einer Reihenschaltung angeordnet sind und dass eine zweite Induktivität (7) derart angeordnet ist, dass ihr erster Anschluss mit einem Punkt zwischen der ersten Induktivität (4) und der ersten Kapazität (5) und ihr zweiter Anschluss mit einem Punkt zwischen dem ersten und dem zweiten Schalter (9, 10) verbunden ist.

Gemäß einem zweiten Aspekt wird zur Verfügung gestellt ein Gleichstromwandler, umfassend einen Eingang (2) und einen Ausgang (3), einen zwischen dem Eingang (2) und dem Ausgang (3) angeordneten Längszweig, in welchem eine erste Induktivität (4) und ein erster Kondensator (5) angeordnet ist, und einen in einem ersten Querzweig am Ausgang (3) angeordneten Kondensator (8), dadurch gekennzeichnet, dass in einem parallel zum ersten Querzweig angeordneten zweiten Querzweig eine zweite Induktivität (7) und ein zweiter Schalter (10) in einer Reihenschaltung angeordnet sind, wobei ein dem zweiten Schalter (10) abgewandter Anschluss der zweiten Induktivität (7) direkt mit dem Ausgang (3) verbunden ist und dass ein erster Schalter (9) derart angeordnet ist, dass sein erster Anschluss mit einem Punkt zwischen der zweiten Induktivität (7) und dem zweiten Schalter (10) und sein zweiter Anschluss mit einem Punkt zwischen der ersten Induktivität (4) und der ersten Kapazität (5) verbunden ist.

Gemäß einem dritten Aspekt wird zur Verfügung gestellt ein Gleichstromwandler, umfassend einen Eingang (2) und einen Ausgang (3), einen zwischen dem Eingang (2) und dem Ausgang (3) angeordneten Längszweig, in welchem eine erste Induktivität (4) und ein erster Kondensator (5) angeordnet ist, und einen in einem ersten Querzweig am Ausgang (3) angeordneten Kondensator (8), dadurch gekennzeichnet, dass in einem parallel zum ersten Querzweig angeordneten zweiten Querzweig ein zweiter Schalter (10) und eine zweite Induktivität (7) in einer Reihenschaltung angeordnet sind, wobei ein der zweiten Induktivität (7) abgewandter Anschluss des zweiten Schalters (10) direkt mit dem Ausgang (3) verbunden ist und dass ein erster Schalter (9) derart angeordnet ist, dass sein erster Anschluss mit einem Punkt zwischen dem zweiten Schalter (10) und der zweiten Induktivität (7) und sein zweiter Anschluss mit einem Punkt zwischen der ersten Induktivität (4) und der ersten Kapazität (5) verbunden ist.

Bei dem Gleichstromwandler gemäß einem der genannten ersten bis dritten Aspekte kann als erster Schalter (9) und/oder zweiter Schalter (10) ein aktiver Halbleiterschalter angeordnet sein. Der Halbleiterschalter kann ein BJT, MOSFET oder IGBT sein.

### Bezugszeichenliste

- 1: Gleichstromwandler
- 2: Eingang
- 3: Ausgang
- 4: erste Induktivität
- 5: erste Kapazität, Kondensator
- 6: Diode
- 7: zweite Induktivität
- 8: zweite Kapazität, Kondensator
- 9: erster Schalter
- 10: zweiter Schalter

## Patentansprüche

1. Gleichstromwandler, umfassend einen Eingang (2) und einen Ausgang (3), einen zwischen dem Eingang (2) und dem Ausgang (3) angeordneten Längszweig, in welchem eine erste Induktivität (4) und eine erste Kapazität (5) angeordnet sind, und einen in einem ersten Querzweig am Ausgang (3) angeordneten Kondensator (8), wobei in einem parallel zum ersten Querzweig angeordneten zweiten Querzweig ein erster aktiver Halbleiterschalter (9) und ein zweiter aktiver Halbleiterschalter (10) in einer Reihenschaltung angeordnet sind und wobei eine zweite Induktivität (7) derart angeordnet ist, dass ihr erster Anschluss mit einem Punkt zwischen der ersten Induktivität (4) und der ersten Kapazität (5) und ihr zweiter Anschluss mit einem Punkt zwischen dem ersten und dem zweiten aktiven Halbleiterschalter (9, 10) verbunden ist, wobei ein dem zweiten aktiven Halbleiterschalter (10) abgewandter Anschluss des ersten aktiven Halbleiterschalters (9) direkt mit dem Ausgang (3) verbunden ist, und wobei die erste Kapazität (5) mit dem gleichen Pol des Ausgangs (3) direkt verbunden ist wie der dem zweiten aktiven Halbleiterschalter (10) abgewandte Anschluss des ersten aktiven Halbleiterschalters (9),
wobei der Gleichstromwandler eine zentrale Steuerung zur Ansteuerung der aktiven Halbleiterschalter (9, 10) umfasst,
wobei die zentrale Steuerung dazu eingerichtet ist, die Steuersignale für den ersten aktiven Halbleiterschalter (9) und den zweiten aktiven Halbleiterschalter (10) derart bereitzustellen, dass die aktiven Halbleiterschalter (9, 10) wechselseitig angesteuert werden, wobei der erste aktive Halbleiterschalter (9) geschlossen ist, wenn der zweite aktive Halbleiterschalter (10) geöffnet ist, und umgekehrt,
wobei, bezogen auf eine gemeinsame Masse, die Polarität der Spannung am Ausgang (3) gleich der Polarität der Spannung am Eingang (2) ist.

2. Gleichstromwandler, umfassend einen Eingang (2) und einen Ausgang (3), einen zwischen dem Eingang (2) und dem Ausgang (3) angeordneten Längszweig, in welchem eine erste Induktivität (4) und eine erste Kapazität (5) angeordnet ist, und einen in einem ersten Querzweig am Ausgang (3) angeordneten Kondensator (8), wobei in einem parallel zum ersten Querzweig angeordneten zweiten Querzweig ein zweiter aktiver Halbleiterschalter (10) und eine zweite Induktivität (7) in einer Reihenschaltung angeordnet sind, wobei ein der zweiten Induktivität (7) abgewandter Anschluss des zweiten aktiven Halbleiterschalters (10) direkt mit dem Ausgang (3) verbunden ist und wobei ein erster aktiver Halbleiterschalter (9) derart angeordnet ist, dass sein erster Anschluss mit einem Punkt zwischen dem zweiten aktiven Halbleiterschalter (10) und der zweiten Induktivität (7) und sein zweiter Anschluss mit einem Punkt zwischen der ersten Induktivität (4) und der ersten Kapazität (5) verbunden ist,
wobei im Falle eines Durchsteuerns einer der beiden aktiven Halbleiterschalter (9, 10) der aktive Halbleiterschalter (9, 10) einen Stromfluss in eine beliebige Richtung ermöglicht,
**dadurch gekennzeichnet, dass** die erste Kapazität (5) direkt mit dem Ausgang verbunden ist, wobei die erste Kapazität (5) mit dem gleichen Pol des Ausgangs direkt verbunden ist wie der der zweiten Induktivität (7) abgewandte Anschluss des zweiten aktiven Halbleiterschalters (10).

3. Gleichstromwandler nach Anspruch 1 oder 2, **dadurch gekennzeichnet, dass** der erste und der zweite aktive Halbleiterschalter (9, 10) ein BJT, MOSFET oder IGBT sind.

## Claims

1. A DC/DC converter comprising an input (2) and an output (3), a longitudinal arm arranged between the input (2) and the output (3) in which a first inductor (4) and a first capacitor (5) are arranged, and a capacitor (8) arranged in a first shunt arm at the output (3), wherein a first active semiconductor switch (9) and a second active semiconductor switch (10) connected in series are arranged in a second shunt arm in parallel with the first shunt arm, and wherein a second inductor (7) is arranged in such a way that its first terminal is connected to a point between the first inductor (4) and the first capacitor (5) and its second terminal is connected to a point between the first and the second active semiconductor switch (9, 10), wherein a terminal of the first active semiconductor switch (9) facing away from the second active semiconductor switch (10) is directly connected to the output (3), and wherein the first capacitor (5) is directly connected to the same pole of the output (3) as the terminal of the first active semiconductor switch (9) facing away from the second active semiconductor switch (10),
wherein the DC/DC converter comprises a central controller for driving the active semiconductor switches (9, 10),
wherein the central controller is configured for providing the control signals for the first active semiconductor switch (9) and the second active semiconductor switch (10) in such a way that the active semiconductor switches (9, 10) are driven alternately, wherein the first active semiconductor switch (9) is closed when the second active semiconductor switch (10) is open, and vice versa,
wherein, with respect to a common ground, the polarity of the voltage at the output (3) is the same as the polarity of the voltage at the input (2).

2. A DC/DC converter comprising an input (2) and an output (3), a longitudinal arm arranged between the input (2) and the output (3) in which a first inductor (4) and a first capacitor (5) is arranged, and a capacitor (8) arranged in a first shunt arm at the output (3), wherein a second active semiconductor switch (10) and a second inductor (7) connected in series are arranged in a second shunt arm in parallel with the first shunt arm, wherein a terminal of the second active semiconductor switch (10) facing away from the second inductor (7) is directly connected to the output (3), and wherein a first active semiconductor switch (9) is arranged in such a way that its first terminal is connected to a point between the second active semiconductor switch (10) and the second inductor (7) and its second terminal is connected to a point between the first inductor (4) and the first capacitor (5),
wherein in the event that one of the active semiconductor switches (9, 10) is fully turned on, the active semiconductor switch (9, 10) enables current flow in any direction,
**characterized in that** the first capacitor (5) is directly connected to the output, wherein the first capacitor (5) is directly connected to the same pole of the output as the terminal of the second active semiconductor switch (10) facing away from the second inductor (7).

3. The DC-to-DC converter according to claim 1 or 2, **characterized in that** the first and second active semiconductor switches (9, 10) are a BJT, a MOSFET or an IGBT.

## Revendications

1. Convertisseur de courant continu, comprenant une entrée (2) et une sortie (3), une branche longitudinale disposée entre l'entrée (2) et la sortie (3), dans laquelle une première inductance (4) et une première capacité (5) sont disposées, et un condensateur (8) disposé dans une première branche transversale au niveau de la sortie (3), dans lequel, dans une seconde branche transversale disposée en parallèle par rapport à la première branche transversale, un premier commutateur à semi-conducteur actif (9) et un second commutateur à semi-conducteur actif (10) sont disposés en série et dans lequel une seconde inductance (7) est disposée de telle sorte que sa première borne est reliée à un point situé entre la première inductance (4) et la première capacité (5) et sa seconde borne est reliée à un point situé entre les premier et second commutateurs à semi-conducteur actif (9, 10), dans lequel une borne du premier commutateur à semi-conducteur actif (9) opposée au second commutateur à semi-conducteur actif (10) est directement reliée à la sortie (3), et dans lequel la première capacité (5) est directement reliée au même pôle de la sortie (3) que la borne du premier commutateur à semi-conducteur actif (9) opposée au second commutateur à semi-conducteur actif (10),
dans lequel le convertisseur de courant continu comprend une commande centrale pour commander les commutateurs à semi-conducteur actif (9, 10),
dans lequel la commande centrale est configurée pour fournir les signaux de commande pour le premier commutateur à semi-conducteur actif (9) et le second commutateur à semi-conducteur actif (10) de telle sorte que les commutateurs à semi-conducteur actif (9, 10) sont commandés de façon alternée, dans lequel le premier commutateur à semi-conducteur actif (9) est fermé lorsque le second commutateur à semi-conducteur actif (10) est ouvert, et inversement,
dans lequel, par rapport à une masse commune, la polarité de la tension à la sortie (3) est égale à la polarité de la tension à l'entrée (2).

2. Convertisseur de courant continu, comportant une entrée (2) et une sortie (3), une branche longitudinale disposée entre l'entrée (2) et la sortie (3), dans laquelle une première inductance (4) et une première capacité (5) sont disposées, et un condensateur (8) disposé dans une première branche transversale au niveau de la sortie (3), dans lequel, dans une seconde branche transversale disposée en parallèle par rapport à la première branche transversale, un second commutateur à semi-conducteur actif (10) et une seconde inductance (7) sont disposés en série, dans lequel une borne du second commutateur à semi-conducteur actif (10) opposée à la seconde inductance (7) est directement reliée à la sortie (3), et dans lequel un premier commutateur à semi-conducteur actif (9) est disposé de telle sorte que sa première borne est reliée à un point situé entre le second commutateur à semi-conducteur actif (10) et la seconde inductance (7), et sa seconde borne est reliée à un point situé entre la première inductance (4) et la première capacité (5),
dans lequel, en cas d'activation, l'un des deux commutateurs à semi-conducteur actif (9, 10) parmi les commutateurs à semi-conducteur actif (9, 10) permet un passage de courant dans un sens quelconque,
**caractérisé en ce que** la première capacité (5) est directement reliée à la sortie, dans lequel la première capacité (5) est directement reliée au même pôle de la sortie que la borne du second commutateur à semi-conducteur actif (10) opposée à la seconde inductance (7).

3. Convertisseur de courant continu selon la revendication 1 ou 2, **caractérisé en ce que** les premier et second commutateurs à semi-conducteur actif (9, 10) sont un transistor bipolaire à jonctions (BJT), un transistor à effet de champ à semi-conducteur d'oxyde métallique (MOSFET) ou un transistor bipolaire à grille isolée (IGBT).
